Europäisches Patentamt
European Patent Office
Office européen des brevets

(19)

(11) Publication number: 0 011 332 A1

(12) # EUROPEAN PATENT APPLICATION

(21) Application number: 79200646.2

(22) Date of filing: 06.11.79

(51) Int. Cl.³: A 23 F 3/26
A 23 F 3/18

(30) Priority: 17.11.78 US 961596

(43) Date of publication of application: 28.05.80 Bulletin 80/11

(84) Designated Contracting States: BE DE FR GB IT NL

(71) Applicant: THE PROCTER & GAMBLE COMPANY
301 East Sixth Street
Cincinnati Ohio 45202(US)

(72) Inventor: Strobel, Rudolf Gottfried Karl
7305 Thompson Road
Cincinnati Ohio 45247(US)

(72) Inventor: Gregg, Richard
57 Handel Lane
Cincinnati Ohio 45218(US)

(74) Representative: Gibson, Tony Nicholas et al,
Procter & Gamble European Technical Center
Temselaan 100
B-1820 Strombeek-Bever(BE)

(54) **Method of making instant tea.**

(57) The cold, hard water solubility of a dried instant tea is improved when the dried instant tea is made from an aqueous based frigid fluid-to-plastic tea extract wherein said tea extract is fast frozen to a brittle solid as fast as possible but at least within 15 minutes from start of freezing, ground and appropriately dried.

EP 0 011 332 A1

Croydon Printing Company Ltd.

BAD ORIGINAL

# METHOD OF MAKING INSTANT TEA

The present invention relates to a method of making instant tea and particularly concerns improving the cold, hard water solubility of soluble tea powders particularly suitable for use in iced beverages made with very hard tap water.

It has been customary to prepare cold soluble tea powders or sediment-free concentrates suitable for use in iced beverages by making hot water extracts made of tea or fermented tea leaves and cooling the same to a temperature of approximately 4-10$^{O}$C to precipitate the "cream", which is then removed from the supernatant liquid. Alternatively, insoluble protein or other polyphenol adsorbants are added to the extracts in order to remove part of the oxidized polyphenols responsible for cream formation. The residual liquor is then concentrated to a syrup of desired consistency or dried to a powder. Such processes suffer from the disadvantage that the sediment-free concentrate or dry powder yields a brew which does not reproduce the taste and strength associated with conventional black tea brew, because the cream or oxidized polyphenols removed in these processes are precisely the constituents which provide tea with its characteristic taste. Such teas are therefore described as "flat".

U.S. Patent 4,004,038, January 18, 1977, to Wickremasinghe, discloses cold soluble tea concentrates and powders prepared by extracting tea leaves with hot water and selectively removing nonpolyphenolic, high molecular weight compounds from the tea extract while retaining the phenolic compounds therein and concentrating the resultant extract.

U.S. Patent 2,97[illegible] and Karas, April 4, 1961, discloses the use of short chain polyphosphates to prepare a soluble tea concentrate wherein the tea leaves are extracted with hot water and polyphosphate is added to the aqueous tea extract to combine with substantially all of the calcium ions that will be present in the final tea beverage. But the tea beverage made by Melzard et al. does not taste good due to the large amounts of the polyphosphate additives required to combine with the calcium ions present in most tap waters.

Like polyphosphates, sodium bisulfite is known in instant tea processing art to have certain advantages and disadvantages. In a process described by I. I. Herz, U.S. Patent 2,831,772, April 22, 1958, assigned to Afico SA, a corporation of Switzerland, it is used to make "a highly concentrated tea essence that readily dissolves in cold water" for making iced tea. The "method comprises preparing a hot clear liquid tea essence from tea leaves....and dissolving in said aqueous tea essence an amount of a systemically innocuous sulfite to render soluble in cold water the ordinarily cold water insoluble fraction of the tea essence and concentrating....". While this patent teaches the use of bisulfite in hot tea extraction processes, resulting in cold water soluble tea products, many valuable tea aroma and flavor compounds are lost or destroyed. Like the Melzard et al. patent, the levels of additive (bisulfite) taught in Herz adversely affect delicate tea flavor and aroma balance. Such processes remove and/or alter natural tea components.

In U.S. Patents Nos. 3,997,685, December 14, 1976, and 3,71[illegible] Feb. 20, 1973, both to R. G. K. Strobel, [illegible] the preparation of a Desorbate tea flavor concentrate [illegible] taught. Improved Desorbate

BAD ORIGINAL

processes and products are taught in copending European Patent Application No. 79200467.3, herein incorporated by reference in its entirety. The products produced by the processes of said patent application suffer from a disadvantage in that the clarity (solution stability) of an iced tea beverage made with 12°C water decreases in direct proportion to the hardness of the water. In other words, the Desorbate tea of that application is completely soluble in cool (20°-25°C) distilled water which can then be iced. However, its solubility in cool tap water ranges from satisfactory in relatively soft tap water (4 grain) to less satisfactory in harder tap water (7 grain and higher) in which a slightly cloudy iced beverage is obtained, which cloudiness increases upon standing, especially in the harder waters.

## Summary of the Invention

An object of the present invention is to provide a method of making a good-looking glass of iced Desorbate instant tea that is substantially clear in very hard tap water.

Another object of the present invention is to provide a method of making an improved cold hard water soluble instant tea.

It has been discovered that fast freezing a tea extract will improve the cold hard water solubility of a freeze-dried instant tea. According to the invention, the cold hard water solubility of a dried instant tea is improved when said dried instant tea is made from an aqueous based frigid fluid-to-plastic tea extract wherein said tea extract is fast frozen to a brittle solid within 15 minutes from start of freezing, ground and appropriately dried.

Figure 1 shows [illegible] section of an apparatus adapted to carrying out Desorbate tea extraction. Column section 3 is covered with a lid 10 and supported by a bottom section 1. The column section 3 and the bottom section 1 are separated by a false bottom 6 which is covered with a retaining layer 12 which is composed of cheesecloth, nylon or a stainless steel screen or the like. When column section 3 is charged with substrate tea 15, vacuum 17 is applied through condenser 4 which is submerged in a coolant 5, e.g. liquid nitrogen, ice water or dry ice. Valves 13 are used to regulate the inlet flow rates of steam 14, carbon dioxide 2, inert gas 9, and water 18; steam and water are applied through a nozzle system 11. A condenser inlet warmer 8 prevents frost from plugging up the inlet to the condenser. Flanges 7 hold the various sections and parts of the apparatus together.

Figure 2 is a detailed schematic in cross section of condenser inlet warmer 8. Tap water inlet 20 enters inlet warmer 8 and passes through chamber 21 which jackets the tubing 22 which is a conduit for the initial aqueous tea extract condensate 24 to pass from the bottom section 1 of Figure 1 into the condenser 4. The tap water exits through outlet 23.

## Detailed Description of Invention

An improved, cold hard water-soluble instant tea is made by a process comprising fast freezing a frigid fluid-to-plastic tea extract to a brittle solid state within about 15 minutes, grinding the solid and preferably freeze-drying the cold ground particle to provide said improved cold hard water-soluble instant tea.

It has been discovered that fast freezing a tea extract will improve the cold hard water solubility of an appropriately dried instant tea.

BAD ORIGINAL

[illegible] water solubility of [illegible] soluble [illegible] improved by preparing a soft water-soluble tea extract by extracting tea leaves with water and wet steam using mild temperatures and low absolute pressures and collecting a frigid fluid-to-plastic aqueous tea extract, having preferably from 8% to 20% tea solids, which may be subsequently concentrated by methods known to those skilled in the arts to 35% to 45% solids, and fast freezing said extract to a brittle solid as fast as possible within 15 minutes, grinding the solid, and freeze-drying selected cold ground particles to provide an improved cold hard water-soluble instant tea.

A preferred starting material, the tea extract, for the present invention would provide a stable cool water-soluble instant tea even without fast freezing. Preferably, too, the tea extract starting material is substantially a "whole" tea extract. A detailed description of an improved Desorbate tea process to make such starting material is disclosed in copending patent application Serial No. 936,951, filed August 25, 1978, incorporated herein by reference in its entirety. Thus, preferred methods of the present invention comprising the steps of:

(1) passing steam through a columnar bed of ground tea leaves in such a manner so as to pre-wet and pre-swell an upper portion of said ground tea leaves in said bed, said bed being held at a temperature of below about 65°C and an absolute pressure of about 13 mbar to about 400 mbar (millibar);

(2) slowly passing water and wet steam through said bed in such a manner which avoids flooding of said bed and thereby providing a moving interface between wet swollen tea leaves and substantially dry tea leaves until an initial aqueous tea extract breaks

BAD ORIGINAL

through said bed, said initial aqueous tea extract having a draw-off weight ratio of extract to dry tea leaves of from 0.5:1 to 3:1, said bed being held at said temperature and said pressure until about 1/2 of said water and wet steam have been applied, and then maintaining a temperature in said bed below about 72°C;

(3) collecting said initial aqueous tea extract in a cold trap to provide a frigid fluid-to-plastic tea extract, said cold trap being held at an absolute pressure of about 1 to about 613 mbar and a temperature from about -180°C to about 20°C;

(4) fast freezing said frigid fluid-to-plastic tea extract to a brittle solid, preferably within 10 minutes and more preferably within 5 minutes; when the initial aqueous extract is collected as a frigid liquid, e.g. at 20°C, it may be fast frozen immediately with liquid nitrogen; on the other hand, when the initial aqueous extract is collected in a partially frozen state it is then preferred to plasticize (work) it for uniformity and optimum results before fast freezing; preferably, the frigid fluid-to-plastic tea extract is spread out in a layer of about 2.5 cm thickness, and most preferably about 1 to about 2 cm thickness and plunged into liquid nitrogen; in drum freezing and belt freezing, correspondingly thinner layers of tea extracts are required for uniform fast freezing, which can be accomplished by liquid $N_2$ or $CO_2$ sprays;

(5) grinding said solid to a desired particle size and freeze-drying said ground particles to provide an improved cold, hard water-soluble instant tea.

Other preferred embodiments of the present invention include a process wherein said pre-wetted and pre-swelled upper portion is about 1 to about 30%

BAD ORIGINAL

of said bed; and most preferably wherein said pre-wetted and pre-swelled upper portion is about 10 to about 25% of said bed; and wherein said bed temperature is held below 55°C; and wherein said bed and said cold trap are both held at an absolute pressure of from about 10 mbar to about 400 mbar and at a temperature of below about 55°C and said cold trap at a temperature below about 10°C and a pressure of below about 400 mbar, and wherein said draw-off ratio is from about 0.9:1 to about 2.5:1; and more preferably wherein said bed is held at an absolute pressure of about 25 mbar to about 300 mbar; and wherein said cold trap temperature is below about -60°C; or wherein said bed has an initial temperature of about 10°C and said cold trap has an initial temperature cold enough to trap a steam-water desorbed tea aroma and flavor fraction in the form of a frost. Another preferred embodiment includes said process wherein $CO_2$ gas is pulsed through said bed during steps (1) and (2) to increase extraction yields. Of course, a small amount of water can be used with said steam to pre-wet and pre-swell the dry tea leaves in step (1). Fast freezing of a fluid-to-plastic tea extract having a concentration of at least about 8% is important to getting a preferred final dried product having a suitable density of about 0.05 to 0.15 g/cc, and more preferably 0.08 to about 0.12 g/cc. Preferably, the initial extract as collected has a tea solids concentration of 8% or above.

It should be noted that about 30% of the tea bed could be pre-wetted and pre-swelled. Preferably, the upper 10% to 25%, but as little as the upper 5% or 10%, of the bed can be pre-wetted and pre-swelled for improved Desorbate runs.

The Desorbate tea without fast freezing is soluble in cool (20°-25°C) distilled water which can then be iced; or the Desorbate tea without

BAD ORIGINAL

fast freezing can be dissolved in warm tap water (35°C) and then iced. However, its initial solubility in cool tap water ranges from satisfactory in relatively soft tap water (4 grain) to less satisfactory in harder tap water (7 grain and higher) in which a slightly cloudy iced beverage is obtained. Cloudiness increases upon standing, especially in the harder waters. Fast freezing is critical for cold hard water solubility with solution stability.

The importance of maintaining mild desorption temperatures is re-emphasized. Low mild temperatures below 65°C and preferably below 55°C should be maintained during at least the first half of a tea desorption run. Whereas coffee desorption can be advantageously executed at temperatures over 65°C, it has been discovered that by keeping the temperature below 65°C and preferably below 55°C during the first 1/2 of a tea run, results in a dried instant with a milder and smoother flavor which surprisingly exhibits improved solubility in cooler water independent of fast freeze.

The cold, hard water solubility of the Desorbate tea of this invention is surprisingly further improved by treating the process water with a minor but effective amount of an edible water-soluble additive selected from the group consisting of suitable higher chain polyphosphates, sulfites, bisulfites and suitable carrageenans. A preferred additive is a low-calcium lambda-carrageenan. More preferred are alkali metal or ammonium sulfite and bisulfite. Most preferred of these is sodium bisulfite which is used at a level of 0.005% to 0.5%, most preferably at 0.01% to 0.04% in the process water. Low-calcium lambda-carrageenan is also used at a level of 0.005% to 0.5%, and preferably at 0.01% to 0.02%, in the process water.

The cold, hard water solubility and solution stability of Desorbate tea prepared by the process of this invention are best improved by treating the

process water with a minor but effective amount of a higher chain water soluble polyphosphate. As used herein, a higher chain polyphosphate contains about 15 to 100 phosphorus atoms per molecule. Most preferable is Glass H®, which averages 21 phosphorus atoms per molecule. Preferred polyphosphate treated water contains from about 0.005% to about 0.3% of said polyphosphate; and more preferably said polyphosphate treated water contains from about 0.01% to about 0.14% of said polyphosphate. An additional advantage is seen if a little polyphosphate water is sprinkled on a lower portion (5 or 10%) of the tea bed when loading the desorption column before steaming. The structure of the preferred additive polyphosphate, also referred to as sodium phosphate glass, may be represented as follows:

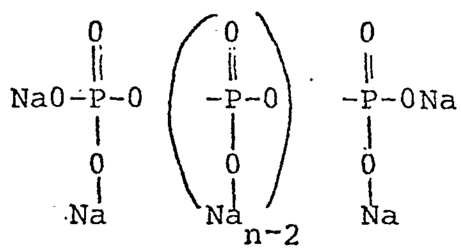

Glass H®, the most preferred polyphosphate, has a chain length of $\bar{n} = 21$. Glass H® may be obtained commercially from FMC Corporation, Inorganic Chemical Division, 633 Third Avenue, New York 10017. FMC's technical bulletin 570-6A "GLASS H" is herein incorporated by reference in its entirety. It has been found that the use of polyphosphates of a higher average chain length than "Hexaphos" (13 phosphorus atoms) is critical to the preparation of Desorbate tea which is soluble in cold, hard water and at the same time retains a clean, fresh brewed tea-like flavor, e.g., Desorbate tea made with process water which contains 0.02% by weight of Glass H® gives a clear solution

BAD ORIGINAL

in cool (~20°C), hard (~9 grain) water, but the same water needs nearly 1% "Hexaphos" to achieve this result, and the latter level of "Hexaphos" does not maintain clarity of solution (solution stability) upon standing, whereas Glass H® does. Of course, other long chain polyphosphates which are edible and soluble in water other than Glass H® are useful in the practice of the present invention.

Fast freezing the fluid-to-plastic tea extract to a brittle solid should be accomplished within 15 minutes, preferably within 10 minutes, and more preferably within 5 minutes. In other words, the extract is most preferably frozen to a brittle solid as fast as possible. Preferably, the fluid-to-plastic tea extract is spread out in a layer of about 2.5 cm thickness, and more preferably about 1 to about 2 cm thickness, and plunged into liquid nitrogen; greater thicknesses have been found to be undesirable for uniform fast freezing; in other embodiments of the present invention, e.g. cryogenic drum fast freezing or cryogenic belt fast freezing, correspondingly thinner layers of tea extracts are required for uniform fast freezing.

The foregoing detailed description of invention and the following examples further illustrate or highlight the best modes currently contemplated for carrying out the present invention, i.e. in the context of Desorbate tea technology, so it must not be construed as limiting the present invention in an unreasonable manner. Fast freezing 8-45% tea solids, aqueous tea extracts made via other methods, e.g. a slurry extraction method, reconstitution of dried tea solids, freeze concentration of lower solids extracts, etc., can improve cold hard water solubility of an appropriately dried instant tea made therewith. At higher concentration the aqueous tea extracts are preferably foamed before fast freezing by techniques known to those skilled in the art.

## EXAMPLE I

### Fast Freezing a Low Temperature Desorbate Tea Preparation

Ten kg of a tea blend consisting of 60% Ceylon BOP, 30% Kenya BOP, and 10% India Assam BOP black teas, was ground on an American Duplex mill. An approximate particle size distribution is shown in the table following below.

Tea Particle Size Distribution After Grinding

| Mesh Size in Microns | Ground Tea Particles in % |
|---|---|
| 1680 | 0.0 |
| 1190 | 0.5 |
| 850 | 14.0 |
| 590 | 32.5 |
| 420 | 25.2 |
| 300 | 14.0 |
| 180 | 9.2 |
| 125 | 2.5 |
| pan | 2.0 |

The particle size distribution shown in the table above is to be maintained within a ± 15% deviation limit in the 850 to 420μ range in order to maintain proper flow rates during the desorption steps of processing.

A 60 cm diameter desorption column was loaded with ground tea on a retaining layer consisting of a nylon netting and 8 layers of cheesecloth placed on top of the false bottom to prevent the falling of fine tea particles into the condenser. The first 10% of the dry tea leaves were sprayed with about 100 ml of water containing 0.3% Glass H® before the remainder was loaded into the column. The retaining layers were wetted lightly with water immediately before loading the column. The ground tea was put into the

column and spread out evenly to obtain a [illegible] bed of uniform height throughout.

The column lid was lowered and the column evacuated to about 45 mbar (millibar). At this point the column exit valve was closed and steam was applied through the nozzle system to pre-swell the uppermost layers (top 25%) of the tea bed. Steam was applied until the pressure was increased to about 85 mbar. The pressure was then further increased to about 150 mbar by applying gaseous $CO_2$ through the $CO_2$ valve located in the lid section.

Details about the water application, bed temperatures, head space temperatures of the column and the condenser and the vacuum in the column head are shown in Table I. The cold trap had a head temperature of about -40°C starting and maintained at below about 0°C.

Table I

Desorption Parameters

| Time in Minutes | Col. Head mbar | Temperature, °C. Column Head | Bed | Condenser Head | Water added to column in liters |
|---|---|---|---|---|---|
| --* | 45 | 8 | 5 | 4 | -- |
| 000** | 150 | 39 | 38 | 33 | 0.0 |
| 005 | 150 | 46 | 45 | 46 | 6.5 |
| 010 | 190 | 47 | 42 | 42 | 12.0 |
| 015 | 240 | 52 | 57 | 43 | 17.0 |
| 020 | 270 | 59 | 58 | 49 | 22.0 |
| 025 | 340 | 62 | 61 | 54 | 27.0 |
| 030 | 320 | 65 | 64 | 59 | 31.5 |
| 036 | 350 | 67 | 66 | 64 | 34.0 |

*after pump down
**after steam and $CO_2$-application

BAD ORIGINAL

Process water used was 34 liters containing about 0.03% Glass I®. Boiling process water which turns to wet-steam, was then applied in spurts through the water valve, a solenoid valve, actuated by a pre-programmed audio tape system. The time of the run was about 36 minutes. The initial aqueous tea extract was condensed in a partial frozen state. About 16.56 kg were collected which contained 12.4% tea solids. The draw-off ratio of extract to dry tea was 1.656:1; yield 20.5%. The condenser trap (30 cm diameter) was submerged in a liquid nitrogen bath.

The initial aqueous tea extract was immediately removed from the condenser to a plastic bag and physically worked into uniform frigid fluid-plastic, which took about 1/2 hour, and then spread out in a layer or about 2 cm on stainless steel pans and then frozen solid within a period of about 5 minutes by immersing the pans in liquid nitrogen. The solid was cold ground, sieved to get particles of 850 to 2800 microns, and freeze dried. This product was substantially soluble in cold (12°C) hard (9 grain) water and totally soluble in cool (20-25°C) hard water and showed solution stability upon addition of ice or upon standing at room temperature for three hours.

EXAMPLE II

A frigid-to-plastic tea extract like that of Example I was prepared following the method therein except that untreated pure process water was used. The extract was fast frozen in about 5 minutes. The instant tea made from the freeze-dried tea was initially as soluble as that of Example I but lacked its solution stability.

## EXAMPLE III

### Slow Freezing a Low Temperature Desorbate Tea Preparation at -40°C

A pan of frigid-to-plastic tea extract like that of Example I was frozen solid in about 4 hours. The solid was ground the same as in Example I. This product was exceedingly less soluble in cold hard water than the fast frozen instant tea of Example I.

Thus, a surprising improvement in cold water solubility was noted when the initial aqueous extract was collected under cryogenic or frigid conditions and promptly worked up, fast frozen and freeze dried. In general, it is preferred that the fast freezing time is less than 15 minutes and preferably within 10 minutes, including freezing time. Surprisingly, fast freezing is beneficial as a preceding step to freeze drying an aqueous extract having a tea solids concentration of from about 8% to about 20% and is optimum for extracts having tea solid concentrations of from about 9% to about 13.5%.

## EXAMPLE IV

An aqueous tea extract containing 45% tea solids was prepared from reconstituted dry instant tea powder prepared by slow freezing in accordance with Example III. This reconstituted tea extract liquid was foamed by forcing $CO_2$ therein under a pressure of about 900 pounds per square inch in a pressure vessel. The tea/water/$CO_2$ mixture was permitted via a valve to exit the pressure vessel into an agitated liquid nitrogen bath and was instantly fast frozen to a brittle foam-like solid. The cold brittle solid was cold ground and freeze-dried. The resultant product showed improved cold, hard water solubility over the original slow frozen extract of Example III. Thus, fast freezing improved the hard, cold water solubility of the reconstituted slow frozen tea powder. Moreover, this fast frozen tea powder also had a density of 0.101 which is ideal for making a glass of iced tea with one teaspoon of tea powder.

BAD ORIGINAL

## CLAIMS

1. A method of making instant tea having improved cold water solubility characterized by fast freezing a frigid fluid-to-plastic tea extract to a brittle solid state within 15 minutes of initiation of said freezing, said frigid fluid-to-plastic tea extract having a tea solids content of from 8% to 45% by weight of said extract; grinding said brittle solid to a desirable particle size distribution while keeping said particles frozen solid, and appropriately drying said ground particles to provide said improved cold hard water soluble instant tea.

2. A method according to Claim 1 characterized in that the fluid-to-plastic tea extract is prepared by:

(1) passing steam through a columnar bed of ground tea leaves in such a manner so as to pre-wet and pre-swell only an upper portion of said ground tea leaves in said bed, said bed being held at a temperature of below 65°C and an absolute pressure of 13 mbar to 400 mbar;

(2) slowly passing water and wet steam through said bed in such a manner which avoids flooding of said bed and thereby providing a moving interface between wet swollen tea leaves and substantially dry tea leaves until an initial aqueous tea extract having a draw-off weight ratio of extract to dry tea leaves of from 0.5:1 to 3:1, said bed being held at said temperature and said pressure until one-half of said water and wet steam have been applied, and then maintaining a temperature in said bed below 72°C;

(3) collecting said initial aqueous tea extract in a cold trap to provide a frigid fluid-to-plastic tea extract, said initial aqueous tea extract having a tea solids content of from 8% to 20%,

said cold trap being held at an absolute pressure of 1 to 613 mbar and a temperature of from $-180^{o}C$ to $20^{o}C$.

3. A method according to Claim 1 or 2 characterized in that said fast freezing of said frigid fluid-to-plastic tea extract to a solid is completed within 10 minutes of initiation of freezing.

4. A method according to any preceding Claim characterized in that said fast frozen and freeze dried instant tea provides a stable "cold, hard" water-soluble instant tea, which upon reconstitution provides a substantially clear tea beverage that tastes like a fresh expertly brewed tea drink, said reconstituted tea beverage remaining substantially soluble at iced tea temperatures.

5. A method according to Claim 4 characterized in that when said fast frozen and freeze dried instant tea is put into solution with a minimum amount of warm water and diluted to beverage strength it provides a crystal clear and solution stable iced tea.

6. A method according to any preceding Claim characterized in that said frigid fluid-to-plastic tea extract is fast frozen in layer sheets having a thickness of from 1 to 2 centimetres.

7. A method according to any preceding Claim characterized in that said cold ground particles are freeze dried or dried by microwaves.

8. A method according to any preceding Claim characterized in that said fluid-to-plastic tea extract is fast frozen in a drum freezing apparatus or on a rotating cryogenic belt.

9. A method according to any preceding Claim characterized in that said tea extract is substantially a whole tea extract which upon reconstitution comprises a tea chemical composition substantially the same as that of freshly brewed tea.

10. A method according to any preceding Claim characterized in that said frigid fluid-to-plastic tea extract is appropriately foamed before fast freezing.

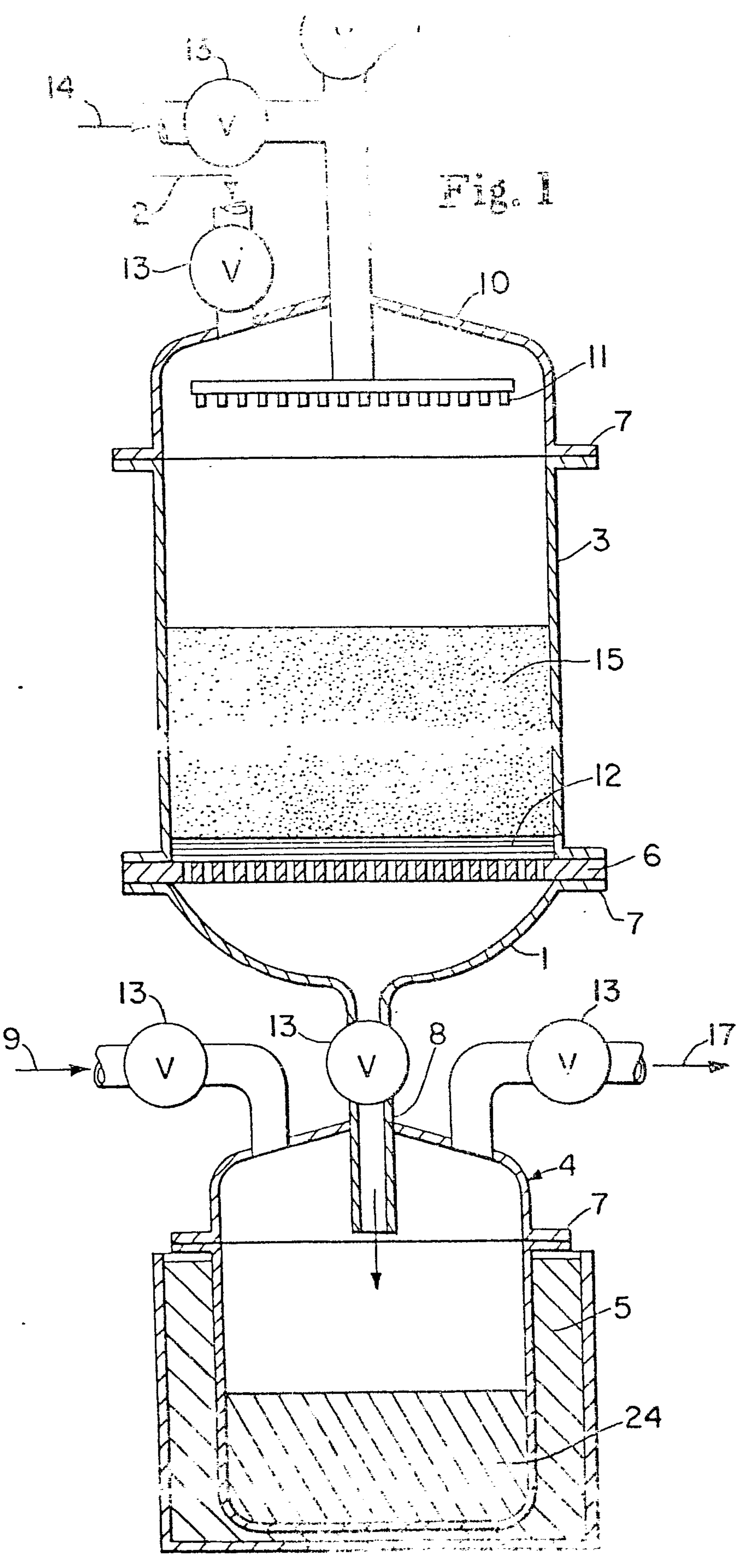


Fig. 1

BAD ORIGINAL

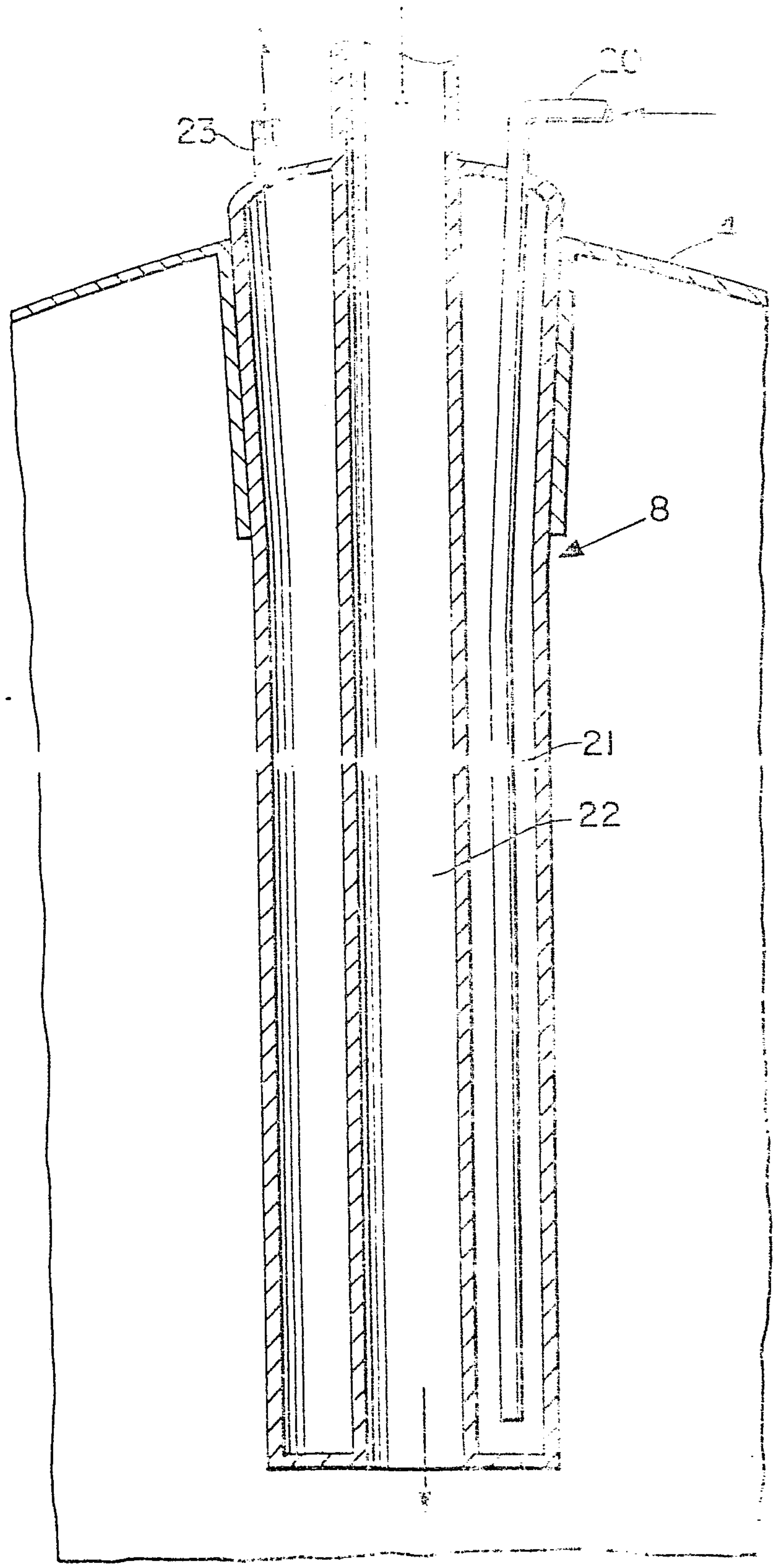
20
23
4
8
21
22

0011332

Application number

EP 79 20 0646

European Patent Office

# EUROPEAN SEARCH REPORT

| Category | Citation of document with indication, where appropriate, of relevant passages | Relevant to claim |
|---|---|---|
| X | FR - A - 1 482 105 (SOC. DES PRODUITS NESTLE)<br>* Abstract I, points 1,4,7,8,9,11, 12; page 3, column 2, paragraph 3; examples *<br>-- | 1,3-10 |
| X | FR - A - 2 108 588 (SOC. DES PRODUITS NESTLE)<br>* Claims 1,9; examples 1,3; page 4, line 5 to page 6, line 16 *<br>-- | 1,3-10 |
| X | FR - A - 1 560 779 (SOC. DES PRODUITS NESTLE)<br>* Abstract I, points 1,3,4; example 2 *<br>-- | 1,3-10 |
| X | DE - A - 2 133 739 (HILLS BROS. COFFEE)<br>* Claims 1-4; page 6; page 16, paragraph 2; page 17, paragraph 3 to page 19, paragraph 2 *<br>-- | 1,3-9 |
| | GB - A - 1 231 175 (J. LYONS)<br>* Claims 1,4,5; page 1, lines 56-79 *<br>-- | 1,4,7, 9,10 |
| D | US - A - 3 997 685 (R. STROBEL)<br>* Claims 1,2; example 7; column 15, lines 46-68 *<br>---- | 1,2 |

CLASSIFICATION OF THE APPLICATION (Int. Cl.³)

A 23 F 3/26
3/18

TECHNICAL FIELDS SEARCHED (Int.Cl.³)

A 23 F 3/26
3/22
3/18
5/32
A 23 P 1/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 22-02-1980 | DESMEDT |